# EUROPÄISCHE PATENTANMELDUNG

(11) **EP 4 818 537 A1**
(43) Veröffentlichungstag der Anmeldung: **07.10.2026**
(21) Anmeldenummer: 25168531.9
(22) Anmeldetag: 04.04.2025
(51) Int. Cl.: F16B 41/00

(54) **SICHERUNGSMUTTER**

(71) Anmelder: Löffler International GmbH & Co. KG, 25494 Borstel-Hohenraden (DE)
(72) Erfinder: LOEFFLER, Christian, 25497 Prisdorf (DE); SEPAROVIC, Vinko, 20000 Dubrovnik (HR); HUNT, Nicholas, 22459 Hamburg (DE)
(74) Vertreter: Patentship Patentanwaltsgesellschaft mbH

(57) **Zusammenfassung**

Die Erfindung betrifft eine Sicherungsmutter (100) zur Sicherung eines gewindeführenden Elements (137) an einem Bauelement (133). Die Sicherungsmutter (100) umfasst ein Mutterteil (101, 101-1, 101-2) mit einem Gewindeaufnahmehohlraum (103) und einem Arretierungshohlraum (107). Im Arretierungshohlraum (107) sind ein Federelement (109) und eine Arretierungsanordnung (111, 111-1, 111-2) angeordnet. Der Arretierungshohlraum (107) weist eine Kontaktöffnung (115) und eine Arretierungsöffnung (119) auf. Im nicht verschraubten Zustand beaufschlagt das Federelement (109) die Arretierungsanordnung (111, 111-1, 111-2), die durch die Öffnungen (115, 119) verlagert wird. Die Arretierungsanordnung (111, 111-1, 111-2) verbindet sich mit einem Befestigungselement (205) eines Sicherungswerkzeugs (200), um dieses unlösbar mit der Sicherungsmutter (100) zu verbinden. Im vollständig verschraubten Zustand wird die Arretierungsanordnung (111, 111-1, 111-2) vollständig in den Arretierungshohlraum (107) verlagert, komprimiert das Federelement (109) und gibt das Befestigungselement (205) frei, um das Sicherungswerkzeug (200) zu lösen.

## Beschreibung

Die vorliegende Offenbarung betrifft eine Sicherungsmutter zur Sicherung eines durch eine Gewindeöffnung eines Bauelements geführten gewindeführenden Elements an dem Bauelement, ein Sicherungswerkzeug zur Sicherung einer Sicherungsmutter an einem durch eine Gewindeöffnung eines Bauelements geführten gewindeführenden Element, sowie eine Sicherungsanordnung, umfassend eine Sicherungsmutter und ein Sicherungswerkzeug.

In einer Vielzahl von unterschiedlichsten technischen Gebieten werden unterschiedlichste Bauelemente mit gewindeführenden Elementen, wie beispielsweise Schrauben und Muttern, fixiert, bzw. gesichert. Problematisch ist hierbei bei besonders sicherheitsrelevanten Bauelementen, dass im Prinzip jedermann mit einem geeigneten Werkzeug, wie beispielsweise einem Sechskant-Schlüssel, eine entsprechende Mutter lösen kann, und damit die Fixierung des entsprechenden sicherheitsrelevanten Bauelements lösen kann, was unter Umständen schwerwiegende Konsequenzen haben kann.

Ein Beispiel für ein entsprechendes sicherheitsrelevantes Bauelement ist hierbei ein Lukendeckel auf einem Schiff. Auf einem Containerschiff wird beispielsweise eine Vielzahl von entsprechenden Lukendeckeln verbaut, um unterschiedlichste Schächte (englisch "manholes") auf dem Schiff zu verschließen. Die entsprechenden Schächte ermöglichen der Besatzung des Schiffs einen Zugang zu unterschiedlichsten Bereichen des Innenraums des Schiffes wie beispielsweise Laderäumen, Ballasttanks, etc., wobei ein entsprechender Zugang hierbei für die Durchführung von Wartungsarbeiten oder Reparaturen in bestimmten Zeitintervallen zwangsläufig notwendig sein kann.

Oftmals führen jedoch eine unsachgemäße Wartung oder menschliches Versagen beim Versiegeln der entsprechenden Schächte durch die Lukendeckel nach dem Beenden der Arbeiten zu sicherheitsrelevanten Problemen. Diese Probleme können beispielsweise eindringendes Wasser oder auslaufende Gefahrstoffe, aber auch das Hineinfallen von Personen in entsprechende unverschlossene Schächte umfassen, so dass hierbei unter Umständen hohe Versicherungsschäden oder sogar Verluste für Leib und Leben auftreten können.

Es besteht somit ein Bedarf, durch gewindeführende Elemente und Muttern fixierte sicherheitsrelevante Bauelemente wirksam vor einem unbefugten Lösen der Fixierung zu schützen.

Es ist die Aufgabe der vorliegenden Offenbarung, eine Sicherungsmutter, bzw. Sicherungswerkzeug, bzw. Sicherungsanordnung zur Fixierung eines gewindeführenden Elements an einem Bauelement bereitzustellen, welche, bzw. welches gegenüber einem unbefugten Lösen der Fixierung gesichert ist.

Diese Aufgabe wird durch die Merkmale der unabhängigen Ansprüche gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass durch die Verwendung einer Sicherungsmutter, welche nur durch ein spezifisches Sicherungswerkzeug von dem gewindeführenden Element, wie einer Schraube, gelöst werden kann, die Person, welche die Sicherungsmutter lösen will, das spezifische Sicherungswerkzeug für den Lösevorgang benötigt. Somit kann die Fixierung des gewindeführenden Elements an dem Bauelement durch die Sicherungsmutter nur mit dem Sicherungswerkzeug gelöst werden. Der Zugang des Sicherungswerkzeugs wird hierbei beispielsweise durch eine verantwortungsvolle Person überwacht und dokumentiert.

Die vorliegende Offenbarung basiert auf der weiteren Erkenntnis, dass die mit dem Sicherungswerkzeug von dem gewindeführenden Element, wie einer Schraube, gelöste Sicherungsmutter nicht von der Sicherungsmutter getrennt werden kann, so dass die fehlende Rückgabe des Sicherungswerkzeugs der verantwortungsvollen Person einen Hinweis gibt, dass die entsprechende Sicherungsmutter nicht wieder auf das gewindeführende Element, wie einer Schraube, aufgebracht wurde, so dass hieraus ein Hinweis für eine fehlende Fixierung des gewindeführenden Elements an dem Bauelement durch die Sicherungsmutter abgeleitet werden kann.

Gemäß einem ersten Aspekt betrifft die Offenbarung eine Sicherungsmutter zur Sicherung eines durch eine Gewindeöffnung eines Bauelements geführten gewindeführenden Elements an dem Bauelement, wobei die Sicherungsmutter ein Mutterteil mit einem Gewindeaufnahmehohlraum aufweist, in welchem ein Innengewinde geformt ist, welches auf ein Außengewinde des gewindeführenden Elements aufschraubbar ist, wobei das Mutterteil einen Arretierungshohlraum aufweist, in welchem zumindest ein Federelement und zumindest eine durch das Federelement beaufschlagte Arretierungsanordnung angeordnet sind, wobei der Arretierungshohlraum an einer dem Bauelement zugewandten Seite zumindest eine Kontaktöffnung und an einer dem Gewindeaufnahmehohlraum abgewandten Seite zumindest eine Arretierungsöffnung aufweist, wobei das Mutterteil im nicht verschraubten Zustand der Sicherungsmutter ausgebildet ist, das Federelement mit einer Kraft zu beaufschlagen und die Arretierungsanordnung abschnittsweise durch die Arretierungsöffnung und abschnittsweise durch die Kontaktöffnung zu verlagern, wobei die abschnittsweise durch die Arretierungsöffnung verlagerte Arretierungsanordnung mit einem Befestigungselement eines Sicherungswerkzeugs verbindbar ist, um im nicht verschraubten Zustand der Sicherungsmutter das Sicherungswerkzeug unlösbar mit der Sicherungsmutter zu verbinden, wobei die im nicht verschraubten Zustand der Sicherungsmutter durch die Kontaktöffnung abschnittsweise verlagerte Arretierungsanordnung im vollständig verschraubten Zustand der Sicherungsmutter durch das Anliegen an dem Bauelement vollständig in den Arretierungshohlraum verlagert ist und ausgebildet ist, das Federelement zu komprimieren, wobei die im nicht verschraubten Zustand der Sicherungsmutter durch die Arretierungsöffnung abschnittsweise verlagerte Arretierungsanordnung im vollständig verschraubten Zustand der Sicherungsmutter vollständig in den Arretierungsbereich verlagert ist, und ausgebildet ist, das Befestigungselement des Sicherungswerkzeugs freizugeben, um im vollständig verschraubten Zustand der Sicherungsmutter das Sicherungswerkzeug von der Sicherungsmutter zu lösen.

Dadurch wird der technische Vorteil erreicht, dass durch das Zusammenspiel des Federelements mit der Arretierungsanordnung in Abhängigkeit von dem vollständig verschraubten oder nicht verschraubten Zustand der Sicherungsmutter an dem gewindeführenden Element die Arretierungsanordnung in unterschiedlichster Weise aus der Arretierungsöffnung, bzw. der Kontaktöffnung verlagerbar ist, um ein wirksames Wechselspiel zwischen Arretierungsanordnung und dem mit der Sicherungsmutter verbindbaren Sicherungswerkzeug zu ermöglichen.

Wenn die Sicherungsmutter an dem gewindeführenden Element vollständig verschraubt ist, wird die im nicht verschraubten Zustand der Sicherungsmutter durch die Kontaktöffnung abschnittsweise verlagerte Arretierungsordnung vollständig in den Arretierungshohlraum verlagert und komprimiert das Federelement. Gleichzeitig ist auch die im nicht verschraubten Zustand der Sicherungsmutter durch die Arretierungsöffnung abschnittsweise verlagerte Arretierungsanordnung im vollständig verschraubten Zustand der Sicherungsmutter vollständig in den Arretierungshohlraum verlagert, wodurch ein Lösen des Sicherungswerkzeugs von der Sicherungsmutter nach dem finalen Verschrauben der Sicherungsmutter möglich ist. Das Sicherungswerkzeug kann somit nach dem vollständigen Verschrauben der Sicherungsmutter von der Sicherungsmutter entfernt werden und der verantwortlichen Person zurückgebracht werden.

Beim Lösevorgang der Sicherungsmutter mit Hilfe des Sicherungswerkzeugs sieht es jedoch anders aus. Im vollständig verschraubten Zustand der Sicherungsmutter kann das Sicherungswerkzeug ohne Probleme auf die Sicherungsmutter aufgeschoben werden, da die in den Arretierungshohlraum verlagerte Arretierungsanordnung gerade nicht durch die Arretierungsöffnung außerhalb der Sicherungsmutter verlagert ist, so dass die Sicherungsmutter ohne Probleme über die Arretierungsöffnung geschoben werden kann.

Wird anschließend während des Lösevorgangs die Sicherungsmutter mit dem angebrachten Sicherungswerkzeug gelöst, wird der Kontakt zwischen der Arretierungsanordnung und dem Bauelement aufgehoben, und die in dem Federelement gespeicherte Federkraft wirkt auf die Arretierungsanordnung und verlagert die Arretierungsanordnung durch die Kontaktöffnung. Gleichzeitig bewirkt die Verlagerung der Arretierungsanordnung während des Lösevorgangs auch eine Verlagerung der Arretierungsanordnung durch die Arretierungsöffnung der Sicherungsmutter, wodurch eine unlösbare Verbindung zwischen der Sicherungsmutter und dem Sicherungswerkzeug bereitgestellt wird. Somit kann die verantwortliche Person anhand einer Nichtzurückgabe des Sicherungswerkzeugs feststellen, dass das Sicherungswerkzeug weiterhin mit der Sicherungsmutter verbunden ist, und die Sicherungsmutter nicht mit dem gewindeführenden Element verschraubt ist.

Insbesondere ist das gewindeführende Element als ein Stift oder Bolzen ausgebildet, welcher das Außengewinde aufweist. Insbesondere ist das gewindeführende Element als eine Schraube oder als ein Schraubbolzen ausgebildet.

Insbesondere ist das Bauelement ein Verschlusselement, welches ausgebildet ist, eine Öffnung zu verschließen. Insbesondere ist das Bauelement ein Lukendeckel, welcher ausgebildet ist, einen Schacht zu verschließen. Insbesondere ist das Bauelement ein Schiffslukendeckel, welcher ausgebildet ist, einen Schacht auf einem Schiff zu verschließen.

Insbesondere weist die Gewindeöffnung des Bauelements ein weiteres Innengewinde auf, in welches das Außengewinde des gewindeführenden Elements einschraubbar ist, bzw. aus welchem das Außengewinde des gewindeführenden Elements ausschraubbar ist.

Insbesondere weist die Gewindeöffnung des Bauelements kein Gewinde auf, und das gewindeführende Element ist durch die Gewindeöffnung des Bauelements führbar.

Insbesondere weist die Gewindeöffnung des Bauelements einen Innendurchmesser auf, welcher größer als ein Außendurchmesser des gewindeführenden Elements ist.

Insbesondere weist das Mutterteil einen einzigen Arretierungshohlraum, insbesondere einen das Mutterteil zumindest abschnittsweise umlaufenden Arretierungshohlraum auf, oder weist das Mutterteil eine Mehrzahl von Arretierungshohlräumen auf, welche beabstandet in dem Mutterteil angeordnet sind.

Insbesondere umfasst das zumindest eine Federelement ein einziges Federelement oder eine Mehrzahl von Federelementen.

Insbesondere umfasst die Arretierungsanordnung eine einzige Arretierungsanordnung oder eine Mehrzahl von Arretierungsanordnungen.

Insbesondere ist die jeweilige Arretierungsanordnung mehrteilig oder einteilig aufgebaut.

Insbesondere umfasst das zumindest eine Kontaktöffnung eine einzige Kontaktöffnung oder eine Mehrzahl von Kontaktöffnungen.

Insbesondere umfasst die zumindest eine Arretierungsöffnung eine einzige Arretierungsöffnung oder eine Mehrzahl von Arretierungsöffnungen.

Insbesondere ist die im nicht verschraubten Zustand der Sicherungsmutter durch die Arretierungsöffnung abschnittsweise verlagerte Arretierungsanordnung im vollständig verschraubten Zustand der Sicherungsmutter vollständig in den Arretierungsbereich verlagert und ausgebildet, mit dem Befestigungselement des Sicherungswerkzeugs nicht zu wechselwirken, um im vollständig verschraubten Zustand der Sicherungsmutter das Sicherungswerkzeug auf die Sicherungsmutter aufzubringen.

Insbesondere ist das Mutterteil einstückig oder mehrstückig ausgebildet.

In einer Ausführungsform weist das Mutterteil ein Mutterinnenteil mit dem Gewindeaufnahmehohlraum auf, in welchem das Innengewinde geformt ist, welches auf das Außengewinde des gewindeführenden Elements aufschraubbar ist, wobei das Mutterteil ein Mutteraußenteil aufweist, welches auf das Mutterinnenteil aufgesetzt ist, wobei das auf das Mutterinnenteil aufgesetzte Mutteraußenteil im nicht verschraubten Zustand der Sicherungsmutter ausgebildet ist, das Federelement mit einer Kraft zu beaufschlagen und die Arretierungsanordnung abschnittsweise durch die Arretierungsöffnung und abschnittsweise durch die Kontaktöffnung zu verlagern.

Dadurch wird der technische Vorteil erreicht, dass durch die zweistückige Ausbildung des Mutterteils, umfassend das Mutterinnenteil und Mutteraußenteil, durch das auf das Federelement wirkende Mutteraußenteil eine wirksame Beaufschlagung des Federelements im nicht verschraubten Zustand der Sicherungsmutter erreicht wird.

In einer Ausführungsform weist das Mutterteil, insbesondere das Mutteraußenteil, einen sich insbesondere von dem Mutterinnenteil erstreckenden Befestigungsschaft mit einer Außenkontur, insbesondere einer 6-Kant-Außenkontur, auf, welche durch ein Befestigungswerkzeug, insbesondere durch ein 6-Kant-Befestigungswerkzeug, hintergreifbar ist.

Dadurch wird der technische Vorteil erreicht, dass die an dem Befestigungsschaft des Mutterteils angebrachte Außenkontur eine wirksame Eingriffsmöglichkeit für das Befestigungswerkzeug darstellt, um die Sicherungsmutter auf das gewindeführende Element zu schrauben, oder um die Sicherungsmutter von dem gewindeführenden Element wieder abzuschrauben.

Insbesondere ist der Befestigungsschaft mit der Außenkontur an dem Mutteraußenteil angeordnet und erstreckt sich der Befestigungsschaft von dem Mutterinnenteil weg.

In einer Ausführungsform ist in dem Mutteraußenteil zumindest eine Außenpositionierungsöffnung geformt, und ist in dem Mutterinnenteil zumindest eine Innenpositionierungsöffnung geformt, wobei zumindest ein Positionierungsarm des Sicherungswerkzeugs durch die fluchtend zueinander angeordnete zumindest eine Außenpositionierungsöffnung und zumindest eine Innenpositionierungsöffnung führbar ist, um das Sicherungswerkzeug mit dem Mutteraußenteil und mit dem Mutterinnenteil formschlüssig zu verbinden.

Dadurch wird der technische Vorteil erreicht, dass der Positionierungsarm des Sicherungswerkzeugs das Mutteraußenteil und das Mutterinnenteil formschlüssig verbindet und hierbei eine Verdrehsicherung zwischen dem Mutteraußenteil und dem Mutterinnenteil erreicht, was letztendlich durch den entsprechenden formschlüssigen Eingriff erst ein Lösen der Sicherungsmutter ermöglicht.

Insbesondere weist das Mutteraußenteil eine Mehrzahl, insbesondere zwei, von Außenpositionierungsöffnungen auf, und weist das Mutterinnenteil eine Mehrzahl von, insbesondere zwei, Innenpositionierungsöffnungen auf, wobei jeweils ein Positionierungsarm des Sicherungswerkzeugs durch die fluchtend zueinander angeordnete jeweilige Außenpositionierungsöffnung und jeweilige Innenpositionierungsöffnung führbar ist, um das Sicherungswerkzeug mit dem Mutteraußenteil und mit dem Mutterinnenteil formschlüssig zu verbinden.

In einer Ausführungsform weist das Mutterinnenteil einen weiteren Befestigungsschaft auf, welcher sich in das Mutteraußenteil, insbesondere in den Befestigungsschaft des Mutteraußenteils, erstreckt und an dem Mutteraußenteil, insbesondere an dem Befestigungsschaft des Mutteraußenteils, durch ein Sicherungselement verliersicher festgelegt ist.

Dadurch wird der technische Vorteil erreicht, dass durch die beiden Befestigungsschäfte von Mutteraußenteil und Mutterinnenteil eine wirksame Stabilisierung erreicht wird.

In einer Ausführungsform ist das auf das Mutterinnenteil aufgesetzte Mutteraußenteil ohne die Verwendung des Sicherungswerkzeugs gegenüber dem Mutterinnenteil verdrehbar gelagert.

Dadurch wird der technische Vorteil erreicht, dass die Sicherungsmutter ohne die Verwendung des Sicherungswerkzeuges nicht von dem gewindeführenden Element abgeschraubt werden kann.

In einer Ausführungsform ist der Arretierungshohlraum als ein das Mutterteil, insbesondere das Mutterinnenteil zumindest abschnittsweise umlaufender Arretierungshohlraum ausgebildet, wobei das zumindest eine Federelement als eine zumindest abschnittsweise umlaufende Tellerfeder ausgebildet ist, welche in dem zumindest abschnittsweise umlaufenden Arretierungshohlraum angeordnet ist, wobei die Tellerfeder in Wirkverbindung mit zumindest zwei Arretierungsanordnungen steht, welche insbesondere auf einander gegenüberliegenden Seiten des Arretierungshohlraums angeordnet sind, oder wobei das zumindest eine Federelement ein erstes Federelement und ein zweites Federelement umfasst, wobei die zumindest eine Arretierungsanordnung eine erste und eine zweite Arretierungsanordnung umfasst, wobei das erste Federelement in Wirkverbindung mit der ersten Arretierungsanordnung steht, wobei das zweite Federelement in Wirkverbindung mit der zweiten Arretierungsanordnung steht, und wobei insbesondere das erste und zweite Federelement, sowie die erste und zweite Arretierungsanordnung jeweils auf einander gegenüberliegenden Seiten des Arretierungshohlraums angeordnet sind.

Dadurch wird der technische Vorteil erreicht, dass die Wechselwirkung zwischen der Sicherungsmutter und dem Sicherungswerkzeug sowohl durch eine einzige Tellerfeder erreicht werden kann, welche in dem zumindest abschnittsweise umlaufenden Arretierungshohlraum angeordnet ist, oder dass alternativ auch zwei an gegenüberliegenden Seiten des Arretierungshohlraums angeordnete Federelemente verwendet werden können, um mit den beiden an gegenüberliegenden Seiten angeordneten Arretierungsanordnungen zu interagieren.

In einer Ausführungsform weist die Arretierungsanordnung zumindest ein Kontaktelement auf, welches einen dem Bauelement abgewandten Federkontaktbereich aufweist, welcher durch das zumindest eine Federelement kontaktiert wird, und welches einen dem Bauelement zugewandten Bauelementkontaktbereich aufweist, welcher ausgebildet ist, im vollständig verschraubten Zustand der Sicherungsmutter an dem Bauelement anzuliegen, wobei der Bauelementkontaktbereich im vollständig verschraubten Zustand der Sicherungsmutter durch das Anliegen des Bauelementkontaktbereichs an dem Bauelement vollständig in den Arretierungshohlraum verlagert ist und ausgebildet ist, das Federelement zu komprimieren, und wobei der Bauelementkontaktbereich im nicht verschraubten Zustand der Sicherungsmutter durch das Federelement mit einer Kraft beaufschlagt wird und abschnittsweise durch die Kontaktöffnung verlagert wird.

Dadurch wird der technische Vorteil erreicht, dass das Kontaktelement als ein separates Element in der Arretierungsanordnung durch den Federkontaktbereich einen wirksamen Kontakt mit dem Federelement ermöglicht, und dass der an der anderen Seite des Kontaktelements angeordnete Bauelementkontaktbereich des Kontaktelements eine wirksame Wechselwirkung mit dem Bauelement ermöglicht.

Liegt der Bauelementkontaktbereich des Kontaktelements im vollständig verschraubten Zustand der Sicherungsmutter an dem Bauelement an, ist der Bauelementkontaktbereich in den Arretierungshohlraum verlagert und der Federkontaktbereich des Kontaktelements komprimiert die Feder.

Liegt der Bauelementkontaktbereich des Kontaktelements im nicht verschraubten Zustand der Sicherungsmutter nicht an dem Bauelement an, so bewirkt die in dem Federelement gespeicherte Federkraft über ein Beaufschlagen des Federkontaktbereichs eine Verlagerung des Bauelementkontaktbereichs des Kontaktelements durch die Kontaktöffnung aus dem Mutterteil hinaus.

In einer Ausführungsform ist der Federkontaktbereich mit dem Bauelementkontaktbereich durch einen Verbindungsbereich verbunden, wobei der Federkontaktbereich eine Federkontaktseite aufweist, an welcher das Federelement aufliegt, wobei sich der Durchmesser des Federkontaktbereichs von der Federkontaktseite in Richtung des Verbindungsbereichs verringert, und/oder wobei der Bauelementkontaktbereich eine Bauelementkontaktseite aufweist, an welcher das Bauelement anliegt, wobei sich der Durchmesser des Bauelementkontaktbereichs von der Bauelementkontaktseite in Richtung des Verbindungsbereichs verringert.

Dadurch wird der technische Vorteil erreicht, dass durch die Verringerung des Durchmessers des Bauelementkontaktbereichs von der Bauelementkontaktseite in Richtung des Verbindungsbereichs eine konische Form des Kontaktelements bereitgestellt wird. Diese konische Form des Kontaktelements ermöglicht bei einer Verlagerung des Kontaktelements der Arretierungsanordnung, dass ein weiteres Element der Arretierungsanordnung, das Arretierungselement, durch die Arretierungsöffnung hinaus oder hinein verlagert wird.

In einer Ausführungsform weist die Arretierungsanordnung zumindest ein Arretierungselement auf, welches an einer dem Sicherungswerkzeug abgewandten Kontaktelementseite durch das zumindest eine Kontaktelement, insbesondere den Federkontaktbereich, kontaktiert wird, und welches eine dem Sicherungswerkzeug zugewandte Sicherungswerkzeugseite aufweist, welche im nicht verschraubten Zustand der Sicherungsmutter durch die Arretierungsöffnung abschnittsweise verlagert ist, um durch das Sicherungswerkzeug hintergriffen zu werden, wobei das Arretierungselement im vollständig verschraubten Zustand der Sicherungsmutter vollständig in den Arretierungshohlraum verlagert ist, um das Sicherungswerkzeug freizugeben.

Dadurch wird der technische Vorteil erreicht, dass das entsprechende Wechselspiel zwischen dem separaten Arretierungselement und dem separaten Kontaktelement der Arretierungsanordnung durch eine Verlagerung des Kontaktelements innerhalb des Arretierungshohlraums auch eine Verlagerung des Arretierungselements durch die Arretierungsöffnung bewirkt, um je nach Verlagerungsrichtung des Arretierungselements das Sicherungswerkzeug freizugeben oder zu arretieren.

Insbesondere ist das Arretierungselement als ein kugelförmiges Arretierungselement ausgebildet.

In einer Ausführungsform ist der Federkontaktbereich mit dem Bauelementkontaktbereich durch einen Verbindungsbereich verbunden, wobei zwischen dem Verbindungsbereich und einer den Arretierungshohlraum begrenzenden Hohlraumwandung des Mutterinnenteils ein Arretierungselementaufnahmeraum geformt ist, wobei im vollständig verschraubten Zustand der Sicherungsmutter der Arretierungselementaufnahmeraum fluchtend zu der Arretierungsöffnung angeordnet ist, um eine vollständige Verlagerung des Arretierungselements in den Arretierungselementaufnahmeraum zu erreichen.

Dadurch wird der technische Vorteil erreicht, dass bei der Verlagerung des Kontaktelements der Arretierungsanordnung im verschraubten Zustand der Sicherungsmutter der sich insbesondere im Durchmesser verjüngende Verbindungsbereich des Kontaktelements derart verlagert, dass der Arretierungselementaufnahmeraum ein ausreichendes Volumen aufweist, dass das Arretierungselement der Arretierungsanordnung von abschnittsweise außerhalb des Mutterteils durch die Arretierungsöffnung in den Arretierungselementaufnahmeraum verlagert werden kann, so dass das Sicherungswerkzeug gelöst werden kann.

In einer Ausführungsform weist der Federkontaktbereich eine Federkontaktseite auf, an welcher das Federelement aufliegt, wobei sich der Durchmesser des Federkontaktbereichs von der Federkontaktseite in Richtung des Verbindungsbereichs verringert, und weist der Bauelementkontaktbereich eine Bauelementkontaktseite auf, an welcher das Bauelement anliegt, wobei sich der Durchmesser des Bauelementkontaktbereichs von der Bauelementkontaktseite in Richtung des Verbindungsbereichs verringert, wobei bei einer Überführung der Sicherungsmutter von dem nicht verschraubten Zustand in den vollständig verschraubten Zustand der Sicherungsmutter das Arretierungselement entlang der sich im Durchmesser verringernden Verjüngungsseite des Federkontaktbereichs geführt wird, bis das Arretierungselement im vollständig verschraubten Zustand der Sicherungsmutter an dem Verbindungsbereich und an der sich im Durchmesser verringernden weiteren Verjüngungsseite des Bauelementkontaktbereichs anliegt.

Dadurch wird der technische Vorteil erreicht, dass durch die sich sowohl von der Federkontaktseite als auch von der Bauelementkontaktseite in Richtung des Verbindungsbereichs des Kontaktelements verringernden Durchmesser eine wirksame Doppelkonus-Form des Kontaktelements erreicht werden kann, welche das mit dem Kontaktelement in Kontakt stehende Arretierungselement an den entsprechenden Verjüngungsseiten führt.

Insbesondere weist das Kontaktelement hier eine Doppelkonusform, insbesondere eine Sanduhrform auf.

In einer Ausführungsform ist die abschnittsweise durch die Arretierungsöffnung verlagerte Arretierungsanordnung durch einen Befestigungsarm eines Sicherungswerkzeugs hintergreifbar, um im nicht verschraubten Zustand der Sicherungsmutter das Sicherungswerkzeug unlösbar mit der Sicherungsmutter zu verbinden, oder ist die abschnittsweise durch die Arretierungsöffnung verlagerte Arretierungsanordnung in eine Befestigungsöffnung, insbesondere eine Nut, eines Sicherungswerkzeugs einführbar, um im nicht verschraubten Zustand der Sicherungsmutter das Sicherungswerkzeug unlösbar mit der Sicherungsmutter zu verbinden.

Dadurch wird der technische Vorteil erreicht, dass die Arretierungsanordnung, insbesondere das Arretierungselement, insbesondere das kugelförmige Arretierungselement mit unterschiedlichen Geometrien des Sicherungswerkzeugs wechselwirken kann, um eine unlösbare Verbindung zwischen der Sicherungsmutter und dem Sicherungswerkzeug im nicht verschraubten Zustand der Sicherungsmutter zu erreichen.

In einer Ausführungsform ist an einer dem Sicherungswerkzeug zugewandten Außenseite des Mutterteils, insbesondere des Mutterinnenteils und/oder des Mutteraußenteils, eine Aufnahme angeordnet, wobei ein an einer der Sicherungsmutter zugewandten Innenseite des Sicherungswerkzeugs eingeordnetes Eingreifelement ausgebildet ist, in die Aufnahme einzugreifen, um das Sicherungswerkzeug formschlüssig mit der Sicherungsmutter zu verbinden.

Dadurch wird der technische Vorteil erreicht, dass durch das Eingreifen des an der Innenseite des Sicherungswerkzeugs angeordneten Eingreifelements in die an der Außenseite des Mutterteils angeordnete Aufnahme eine wirksame formschlüssige Fixierung des Sicherungswerkzeugs an der Sicherungsmutter ermöglicht wird und zudem eine Verdrehsicherung zwischen Mutteraußenteil und Mutterinnenteil erreicht wird.

In einer Ausführungsform ist an einer Oberseite des Mutterteils eine umlaufende Öffnung angeordnet, in welche ein Verbindungselement, insbesondere ein Sprengring, aufgenommen ist, welches ausgebildet ist, mit dem Sicherungswerkzeug eine verliersichere Verbindung zu bilden.

Dadurch wird der technische Vorteil erreicht, dass eine wirksame Kontaktierung des Sicherungswerkzeugs möglich ist.

Gemäß einem zweiten Aspekt betrifft die Offenbarung ein Sicherungswerkzeug zur Sicherung einer Sicherungsmutter an einem durch eine Gewindeöffnung eines Bauelements geführten gewindeführenden Elements, wobei das Sicherungswerkzeug eine Sicherungsfläche aufweist, welche ausgebildet ist, auf einer Seite eines Mutterteils der Sicherungsmutter anzuliegen, wobei das Sicherungswerkzeug zumindest ein Befestigungselement aufweist, welches an der Sicherungsfläche angeordnet und ausgebildet ist, sich entlang der Seite des Mutterteils der Sicherungsmutter zu erstrecken, wobei das zumindest eine Befestigungselement ausgebildet ist, in einem nicht verschraubten Zustand der Sicherungsmutter eine Verbindung mit einer Arretierungsanordnung der Sicherungsmutter bereitzustellen, um das Sicherungswerkzeug verliersicher an der Sicherungsmutter zu befestigen, und wobei das Sicherungswerkzeug zumindest ein Eingreifelement aufweist, welches ausgebildet ist, in eine an der Seite des Mutteraußenteils angeordnete Aufnahme einzugreifen, um das Sicherungswerkzeug formschlüssig mit der Sicherungsmutter zu verbinden.

Dadurch wird der technische Vorteil erreicht, dass durch das Sicherungswerkzeug im nicht verschraubten Zustand der Sicherungsmutter eine unlösbare Verbindung zwischen dem Sicherungswerkzeug und der Sicherungsmutter bereitgestellt wird, und dass sich die Sicherungsmutter ohne das Sicherungswerkzeug nicht von dem gewindeführenden Element lösen lässt.

In einer Ausführungsform weist das Sicherungswerkzeug einen Befestigungsarm auf, welcher ausgebildet ist, die abschnittsweise durch die Arretierungsöffnung verlagerte Arretierungsanordnung zu hintergreifen, um im nicht verschraubten Zustand der Sicherungsmutter das Sicherungswerkzeug unlösbar mit der Sicherungsmutter zu verbinden, oder weist das Sicherungswerkzeug eine Befestigungsöffnung, insbesondere eine Nut, auf, in welche die abschnittsweise durch die Arretierungsöffnung verlagerte Arretierungsanordnung einführbar ist, um im nicht verschraubten Zustand der Sicherungsmutter das Sicherungswerkzeug unlösbar mit der Sicherungsmutter zu verbinden.

Dadurch wird der technische Vorteil erreicht, dass unterschiedliche Mechanismen des Sicherungswerkzeugs möglich sind, um eine unlösbare Verbindung mit der Sicherungsmutter einzugehen.

In einer Ausführungsform weist das Sicherungswerkzeug zumindest zwei Befestigungsarme auf, welche an einander gegenüberliegenden Seiten der Sicherungsfläche angeordnet und ausgebildet sind, sich entlang der Wandungsaußenseite des Mutteraußenteils der Sicherungsmutter und entlang der weiteren Wandungsaußenseite des Mutterinnenteils der Sicherungsmutter zu erstrecken, wobei die zumindest zwei Befestigungsarme ausgebildet sind, in einem nicht verschraubten Zustand der Sicherungsmutter jeweils eine Arretierungsanordnung von zumindest zwei an gegenüberliegenden Seiten der Sicherungsmutter angeordneten Arretierungsanordnungen zu hintergreifen.

Dadurch wird der technische Vorteil erreicht, dass durch die Befestigungsarme des Sicherungswerkzeugs eine wirksame verliersichere Fixierung der Arretierungsanordnung und damit der Sicherungsmutter ermöglicht wird.

In einer Ausführungsform weist die Sicherungsfläche eine Sicherungsflächenausnehmung auf, durch welche ein Befestigungsschaft eines Mutteraußenteils der Sicherungsmutter führbar ist, oder weist das Sicherungswerkzeug einen sich von der Sicherungsfläche erstreckenden Befestigungsschaft mit einer Außenkontur, insbesondere einer 6-Kant-Außenkontur, auf, welche durch ein Befestigungswerkzeug, insbesondere durch ein 6-Kant-Befestigungswerkzeug, hintergreifbar ist.

Dadurch wird der technische Vorteil erreicht, dass auch hier zwei Ausführungen möglich sind. Zum einen kann die Sicherungsmutter den Befestigungsschaft für das Befestigungswerkzeug aufweisen, so dass in diesem Fall die Sicherungsmutter mittels der Sicherungsflächenausnehmung einfach über den Befestigungsschaft der Sicherungsmutter aufgeschoben wird. Zum anderen kann das Sicherungswerkzeug selbst den Befestigungsschaft für das Befestigungswerkzeug aufweisen.

Die für die Sicherungsmutter gemäß dem ersten Aspekt angeführten vorteilhaften Ausführungsformen sind ebenfalls vorteilhafte Ausführungsformen für das Sicherungswerkzeug gemäß dem zweiten Aspekt.

Ebenso sind die für das Sicherungswerkzeug gemäß dem zweiten Aspekt angeführten vorteilhaften Ausführungsformen ebenfalls vorteilhafte Ausführungsformen für die Sicherungsmutter gemäß dem ersten Aspekt.

Gemäß einem dritten Aspekt betrifft die Offenbarung eine Sicherungsanordnung, umfassend eine Sicherungsmutter nach dem ersten Aspekt und ein Sicherungswerkzeug nach dem zweiten Aspekt.

Die für das Sicherungswerkzeug gemäß dem zweiten Aspekt angeführten vorteilhaften Ausführungsformen und die für die Sicherungsmutter gemäß dem ersten Aspekt angeführten vorteilhaften Ausführungsformen sind ebenfalls vorteilhafte Ausführungsformen für die Sicherungsanordnung gemäß dem dritten Aspekt.

Weitere Ausführungsbeispiele werden Bezug nehmend auf die beiliegenden Figuren erläutert. Es zeigen:
- Figs. 1, 2: schematische Darstellungen einer Sicherungsmutter gemäß einer ersten Ausführungsform in einem nicht verschraubten Zustand;
- Fig. 3: eine schematische Darstellung einer Sicherungsanordnung, umfassend die in den Figuren 1 und 2 dargestellte Sicherungsmutter in dem nicht verschraubten Zustand mit einem Sicherungswerkzeug;
- Fig. 4: eine schematische Darstellung der in der Figur 3 dargestellten Sicherungsanordnung in dem verschraubten Zustand;
- Fig. 5: eine schematische Darstellung der in der Figur 4 dargestellten Sicherungsanordnung in dem verschraubten Zustand in einer unterschiedlichen Orientierung;
- Figs. 6, 7: schematische Darstellungen einer Sicherungsanordnung, umfassend ein Sicherungswerkzeug und eine Sicherungsmutter gemäß einer zweiten Ausführungsform in einem nicht verschraubten Zustand; und
- Figs. 8, 9: schematische Darstellungen einer Sicherungsanordnung, umfassend ein Sicherungswerkzeug und eine Sicherungsmutter gemäß einer dritten Ausführungsform in einem nicht verschraubten Zustand.

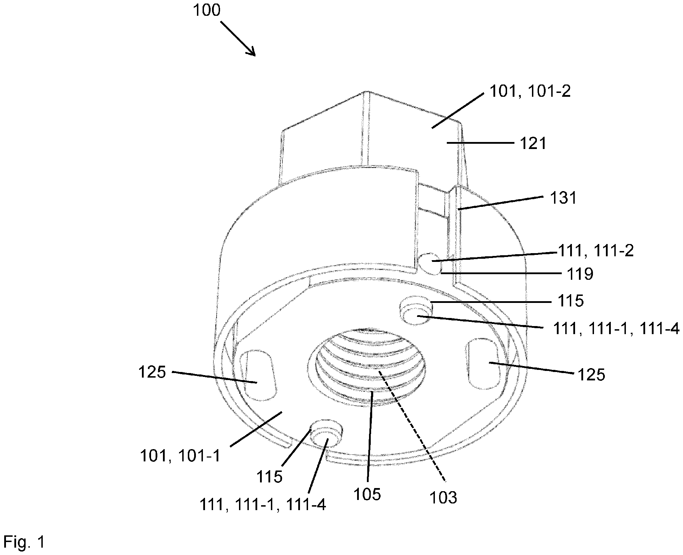

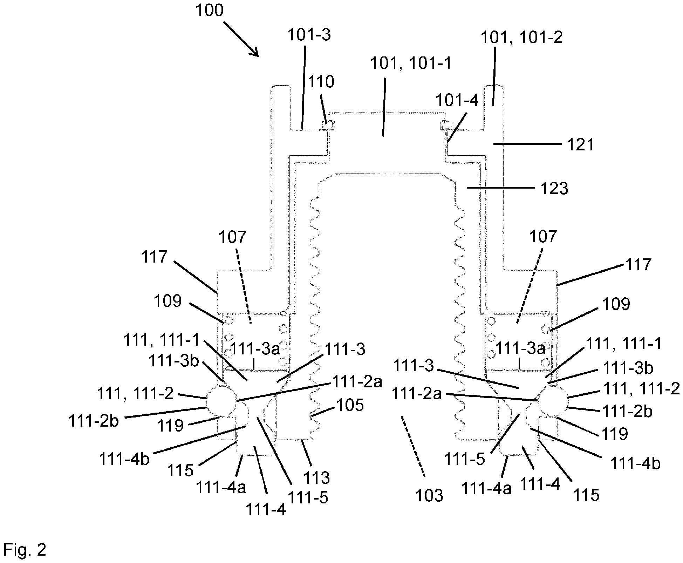

In den Figuren 1 und 2 sind schematische Darstellungen einer Sicherungsmutter gemäß einer ersten Ausführungsform in einem nicht verschraubten Zustand gezeigt.

In der Figur 1 ist die Sicherungsmutter 100 in einer seitlichen Außenansicht dargestellt. In der Figur 2 ist die Sicherungsmutter 100 in einer Schnittansicht dargestellt.

Die in den Figuren 1 und 2 dargestellte Sicherungsmutter 100 dient der Sicherung eines durch eine Gewindeöffnung eines Bauelements geführten gewindeführenden Elements, insbesondere einer Schraube, an dem Bauelement. In dem in den Figuren 1 und 2 dargestellten nicht verschraubten Zustand der Sicherungsmutter sind sowohl das Bauelement als auch das gewindeführende Element in den Figuren 1 und 2 nicht dargestellt.

Insbesondere ist das Bauelement als ein Lukendeckel, bzw. Schiffslukendeckel auf einem Schiff ausgebildet, welcher ausgebildet ist, einen Schacht (im Englischen auch "manhole" genannt) auf dem Schiff sicher zu verschließen, damit während des Betriebs des Schiffes kein Wasser in den Schacht eindringen kann, bzw. aus dem Schacht keine Gefahrstoffe austreten, bzw. keine Personen in den Schacht stürzen können.

Die Sicherungsmutter 100 dient hierbei der Sicherung des gewindeführenden Elements, insbesondere der Schraube, an dem Bauelement, insbesondere Lukendeckel, so dass der Lukendeckel nicht unbeabsichtigt oder unbefugt geöffnet werden kann. Die Sicherungsmutter 100 ist jedoch nicht auf die Anwendung bei einem spezifisch als Lukendeckel ausgebildeten Bauelement beschränkt, sondern kann prinzipiell zur Sicherung jedes gewindeführenden Elements, insbesondere Schraube, an einem beliebigen Bauelement verwendet werden.

Aus der Figur 1 und 2 kann entnommen werden, dass die Sicherungsmutter 100 ein Mutterteil 101 mit einem Gewindeaufnahmehohlraum 103 aufweist, in welchem ein Innengewinde 105 geformt ist, welches auf ein Außengewinde des in der Figur 1 und 2 nicht dargestellten gewindeführenden Elements aufschraubbar ist. Somit kann die Sicherungsmutter 100 mittels des Innengewindes 105 auf das gewindeführende Element aufgeschraubt, bzw. wieder abgeschraubt werden.

Wie dies nur aus der Schnittansicht der Figur 2 hervorgeht, weist das Mutterteil 101 einen Arretierungshohlraum 107 auf, in welchem zumindest ein Federelement 109 und zumindest eine durch das Federelement 109 beaufschlagte Arretierungsanordnung 111 angeordnet sind. In dem in der Figur 1 und Figur 2 dargestellten ersten Ausführungsbeispiel sind insbesondere zwei Arretierungshohlräume 107 vorhanden, in welchen jeweils ein Federelement 109 und jeweils eine Arretierungsanordnung 111 in dem Mutterteil 101 gegenüberliegend angeordnet sind.

Die Arretierungsanordnung 111 umfasst gemäß dem in den Figuren 1 und 2 dargestellten ersten Ausführungsbeispiel ein Kontaktelement 111-1, welches insbesondere eine Doppelkonus-Form, bzw. eine Sanduhr-artige Form aufweist, und ein Arretierungselement 111-2, welches insbesondere eine Kugelform aufweist und damit insbesondere als ein kugelförmiges Arretierungselement 111-2 ausgebildet ist. Alternative geometrische Ausgestaltungen des Kontaktelements 111-1 und des Arretierungselements 111-2 sind auch möglich.

Der Arretierungshohlraum 107 weist jeweils an einer dem in Figur 1 und 2 nicht dargestellten Bauelement zugewandten Seite, insbesondere Unterseite 113 des Mutterteils 101, zumindest eine Kontaktöffnung 115 auf, so dass insbesondere zwei gegenüberliegende Kontaktöffnungen 115 in dem Mutterteil 101 vorhanden sind.

Der Arretierungshohlraum 107 weist jeweils an einer dem Gewindeaufnahmehohlraum 103 abgewandten Seite, insbesondere Außenseite 117 des Mutterteils 101, zumindest eine Arretierungsöffnung 119 auf, so dass insbesondere zwei gegenüberliegende Arretierungsöffnungen 119 in dem Mutterteil 101 vorhanden sind.

In dem in den Figuren 1 und 2 dargestellten nicht verschraubten Zustand der Sicherungsmutter 100 ist das Mutterteil 101 ausgebildet, das Federelement 109 mit einer Kraft zu beaufschlagen und die Arretierungsanordnung 111 abschnittsweise durch die Arretierungsöffnung 119 und abschnittsweise durch die Kontaktöffnung 115 zu verlagern. Insbesondere ist das jeweilige Kontaktelement 111-1 der jeweiligen Arretierungsanordnung 111 durch die Kontaktöffnung 115 verlagert und ist das jeweilige Arretierungselement 111-2 der Arretierungsanordnung 111 durch die Arretierungsöffnung 119 verlagert.

Das Kontaktelement 111-1 der Arretierungsanordnung 111 weist einen dem in den Figuren 1 und 2 nicht gezeigten Bauelement abgewandten Federkontaktbereich 111-3 auf, welcher durch das zumindest eine Federelement 109 kontaktiert wird. Das Kontaktelement 111-1 der Arretierungsanordnung 111 weist einen dem in den Figuren 1 und 2 nicht gezeigten Bauelement zugewandten Bauelementkontaktbereich 111-4 auf, welcher ausgebildet ist, im vollständig verschraubten Zustand der Sicherungsmutter 100 an dem Bauelement anzuliegen.

Der Bauelementkontaktbereich 111-4 wird im nicht verschraubten Zustand der Sicherungsmutter 100 durch das Federelement 109 mit einer Kraft beaufschlagt und abschnittsweise durch die Kontaktöffnung 115 verlagert, wie dies in der Figur 2 und auch in der Figur 1 gezeigt ist.

Aus der Figur 2 ist ferner zu entnehmen, dass der Federkontaktbereich 111-3 mit dem Bauelementkontaktbereich 111-4 durch einen Verbindungsbereich 111-5 verbunden ist.

Der Federkontaktbereich 111-3 weist eine Federkontaktseite 111-3a auf, an welcher das Federelement 109 aufliegt, wobei sich der Durchmesser des Federkontaktbereichs 111-3 von der Federkontaktseite 111-3a in Richtung des Verbindungsbereichs 111-5 verringert.

Der Bauelementkontaktbereich 111-4 weist eine Bauelementkontaktseite 111-4a auf, an welcher das, in den Figuren 1 und 2 nicht dargestellte, Bauelement anliegt, wobei sich der Durchmesser des Bauelementkontaktbereichs 111-4 von der Bauelementkontaktseite 111-4a in Richtung des Verbindungsbereichs 111-5 verringert.

Das Arretierungselement 111-2 wird an einer dem in der Figur 1 und Figur 2 nicht gezeigten Sicherungswerkzeug abgewandten Kontaktelementseite 111-2a durch das zumindest eine Kontaktelement 111-1, insbesondere den Federkontaktbereich 111-3, kontaktiert.

Das Arretierungselement 111-2 weist eine dem nicht gezeigten Sicherungswerkzeug zugewandte Sicherungswerkzeugseite 111-2b auf, welche in dem gezeigten, nicht verschraubten Zustand der Sicherungsmutter 100 durch die Arretierungsöffnung 119 abschnittsweise verlagert ist, um durch das Sicherungswerkzeug hintergriffen werden zu können.

Aus wenn dies nur teilweise aus den Figuren 1 und 2 zu entnehmen ist, wird bei einer Überführung der Sicherungsmutter 100 von dem nicht verschraubten Zustand in den vollständig verschraubten Zustand der Sicherungsmutter 100 das Arretierungselement 111-2 entlang der sich im Durchmesser verringernden Verjüngungsseite 111-3b des Federkontaktbereichs 111-3 geführt, bis das Arretierungselement 111-2 im in den Figuren 1 und 2 nicht gezeigten vollständig verschraubten Zustand der Sicherungsmutter 100 an dem Verbindungsbereich 111-5 und an der sich im Durchmesser verringernden weiteren Verjüngungsseite 111-4b des Bauelementkontaktbereichs 111-4 anliegt.

Für die genauere Darstellung der Wechselwirkung der Sicherungsmutter 100 mit dem Sicherungswerkzeug wird auf die nachfolgenden Ausführungen zu den weiteren Figuren verwiesen.

Aus den Figuren 1 und 2 ist ferner zu entnehmen, dass das Mutterteil 101 zweiteilig aufgebaut ist und ein Mutterinnenteil 101-1 mit dem Gewindeaufnahmehohlraum 103 aufweist, in welchem das Innengewinde 105 geformt ist, und ein Mutteraußenteil 101-2 aufweist, welches auf das Mutterinnenteil 101-1 aufgesetzt ist.

Wie aus der Figur 2 hervorgeht, ist das auf das Mutterinnenteil 101-1 aufgesetzte Mutteraußenteil 101-2 im nicht verschraubten Zustand der Sicherungsmutter 100 ausgebildet, das Federelement 109 mit einer Kraft zu beaufschlagen und die Arretierungsanordnung 111 abschnittsweise durch die Arretierungsöffnung 119 und abschnittsweise durch die Kontaktöffnung 115 zu verlagern.

Aus der Figur 1 ist offensichtlich zu erkennen, dass das Mutteraußenteil 101-2 einen sich von dem Mutterinnenteil 101-1 erstreckenden Befestigungsschaft 121 mit einer Außenkontur, insbesondere einer 6-Kant-Außenkontur, aufweist, welche durch ein Befestigungswerkzeug, insbesondere durch ein 6-Kant-Befestigungswerkzeug, hintergreifbar ist, um die Sicherungsmutter 100 auf das in den Figuren 1 und 2 nicht dargestellte gewindeführende Element aufzuschrauben.

Aus der Figur 2 ist ferner zu erkennen, dass das Mutterinnenteil 101-1 einen weiteren Befestigungsschaft 123 aufweist, welcher sich in das Mutteraußenteil 101-2, insbesondere in den Befestigungsschaft 121 des Mutteraußenteils 101-2, erstreckt und an dem Mutteraußenteil 101-2, insbesondere an dem Befestigungsschaft 121 des Mutteraußenteils 101-2, durch ein in den Figuren 1 und 2 dargestelltes Verbindungselement 110, insbesondere einen Sprengring verliersicher festgelegt ist.

Hierbei ist ferner an einer Oberseite 101-3 des Mutterteils 101, insbesondere an einer Oberseite 101-3 des Mutteraußenteils 101-2, eine umlaufende Öffnung 101-4 angeordnet, in welche das Verbindungselement 110, insbesondere der Sprengring, aufgenommen ist, welches ausgebildet ist, mit dem Sicherungswerkzeug eine verliersichere Verbindung zu bilden.

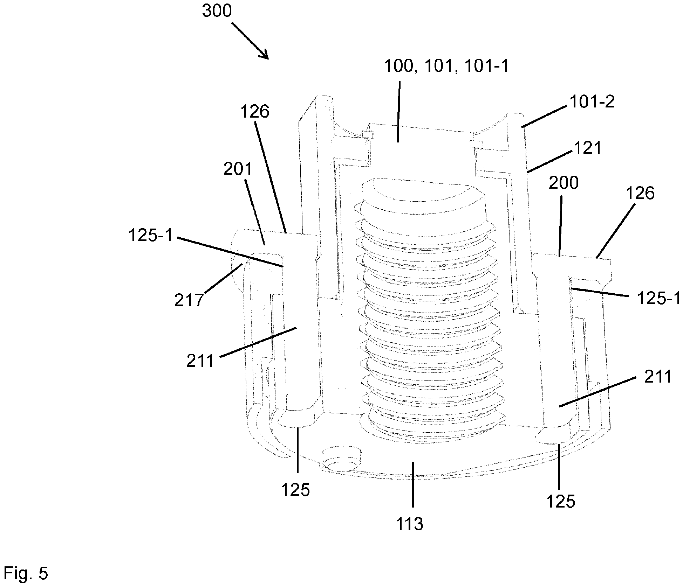

Ferner wird in Bezug auf die Figur 1 noch auf die beiden in dem Mutterteil 101, insbesondere in dem Mutterinnenteil 101-1 und in dem Mutteraußenteil 101-2, geformten Innenpositionierungsöffnung 125 und Außenpositionierungsöffnung (in Figur 1 nicht gezeigt) hingewiesen, welche durch in den Figuren 1 und 2 nicht dargestellte Positionierungsarme eines Sicherungswerkzeugs durchdringbar sind, und deren Funktion in der nachfolgenden Figur 5 näher beschrieben ist.

Ferner wird noch betont, dass auch wenn in den Figuren 1 und 2 ein erstes Federelement 109 und ein zweites gegenüberliegendes Federelement 109 gezeigt sind, welche mit einer entsprechenden ersten und zweiten Arretierungsanordnung 111 in den jeweiligen Arretierungshohlräumen 107 in Wirkverbindung stehen, auch noch die in der Figur 1 und 2 nicht gezeigte Alternative einer einzigen Tellerfeder als ein einziges Federelement 109 existiert.

Hierbei ist der Arretierungshohlraum 107 als ein das Mutterteil 101, insbesondere das Mutterinnenteil 101-1 zumindest abschnittsweise umlaufender Arretierungshohlraum 107 ausgebildet, wobei das zumindest eine Federelement 109 als eine zumindest abschnittsweise umlaufende Tellerfeder ausgebildet ist, welche in dem zumindest abschnittsweise umlaufenden Arretierungshohlraum 107 angeordnet ist, wobei die Tellerfeder in Wirkverbindung mit zumindest zwei Arretierungsanordnungen 111 steht, welche insbesondere auf einander gegenüberliegenden Seiten des Arretierungshohlraums 107 angeordnet sind.

Ferner wird noch auf die in der Figur 1 gezeigte Armaufnahmeöffnung 131, bzw. zwei gegenüberliegende Armöffnungen 131, eingegangen, welche in dem Mutterteil 101, insbesondere in dem Mutteraußenteil 101-2 geformt sind, wobei in die Armaufnahmeöffnungen 131 entsprechende in den Figuren 1 und 2 nicht gezeigte Befestigungsarme eines Sicherungswerkzeugs eingreifen können, um das jeweilige Arretierungselement 111-2 der Arretierungsanordnung 111 zu hintergreifen.

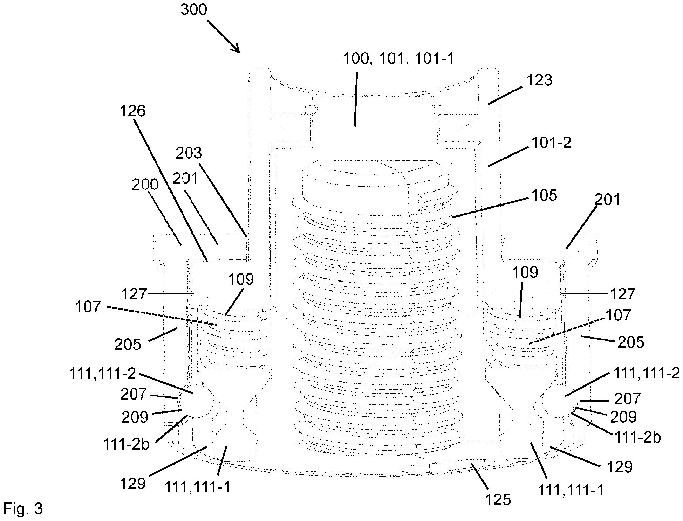

Figur 3 zeigt eine schematische Darstellung einer Sicherungsanordnung, umfassend die in den Figuren 1 und 2 dargestellte Sicherungsmutter in einem nicht verschraubten Zustand mit einem Sicherungswerkzeug.

In der Figur 3 ist eine Schnittansicht der Sicherungsmutter 100 und des Sicherungswerkzeugs 200 gezeigt, wobei jedoch der in der Figur 3 dargestellte Schnitt die in den Aufnahmen 125 des Mutterinnenteils 101-1 aufgenommenen Engreifelemente des Sicherungswerkzeugs 200 nicht zeigt.

Das in der Figur 3 gezeigte Sicherungswerkzeug 200 weist eine Sicherungsfläche 201 auf, welche ausgebildet ist, auf einer Seite des Mutterteils 101 der Sicherungsmutter 100 anzuliegen, insbesondere auf einem Vorsprung 126 des Mutteraußenteils 101-2.

In der in der Figur 3 gezeigten Ausführungsform weist die Sicherungsfläche 201 eine Sicherungsflächenausnehmung 203 auf, durch welche ein Befestigungsschaft 121 des Mutteraußenteils 101-2 der Sicherungsmutter 100 führbar ist, um das Sicherungswerkzeug 200 an der Sicherungsmutter 100 festzulegen.

Wie aus der Figur 3 ferner hervorgeht, weist das Sicherungswerkzeug 200 zwei Befestigungselemente 205, insbesondere Befestigungsarme, auf, welche an einander gegenüberliegenden Seiten der Sicherungsfläche 201 angeordnet und ausgebildet sind, sich entlang der Wandungsaußenseite 127 des Mutteraußenteils 101-2 der Sicherungsmutter 100 und entlang der weiteren Wandungsaußenseite 129 des Mutterinnenteils 101-2 der Sicherungsmutter 100 zu erstrecken.

Hierbei erstrecken sich die Befestigungselemente 205, insbesondere Befestigungsarme, entlang einer in der Figur 1 gezeigten Armaufnahmeöffnung 131 des Mutterteils 101, insbesondere des Mutteraußenteils 101-2, welche in der Figur 3 nicht dargestellt ist.

Die zumindest zwei Befestigungselemente 205, insbesondere Befestigungsarme, sind ausgebildet, in einem nicht verschraubten Zustand der Sicherungsmutter 100 jeweils eine Arretierungsanordnung 111 von zumindest zwei an gegenüberliegenden Seiten der Sicherungsmutter 100 angeordneten Arretierungsanordnungen 111 zu hintergreifen, um das Sicherungswerkzeug 200 verliersicher an der Sicherungsmutter 100 zu befestigen.

Aus der Figur 3 geht hierbei insbesondere hervor, dass die beiden Befestigungselemente 205, insbesondere Befestigungsarme, Befestigungskonturen 207 aufweisen, welche ausgebildet sind, mit einer entsprechenden Gegenbefestigungskontur 209 der Arretierungsanordnung 111, insbesondere des Kontaktelements 111-1, verliersicher einzugreifen.

Die hierbei insbesondere konkav ausgebildeten Befestigungskonturen 207 der Befestigungselemente 205 des Sicherungswerkzeugs 200 legen hierbei die insbesondere konvex ausgebildeten Gegenbefestigungskonturen 209 des insbesondere kugelförmigen Kontaktelements 111-1, insbesondere an der Sicherungswerkzeugseite 111-2b des Kontaktelements 111-1, fest.

Somit kann das Sicherungswerkzeug 200 in dem in der Figur 3 gezeigten nicht verschraubten Zustand nicht von der Sicherungsmutter 100 entfernt werden.

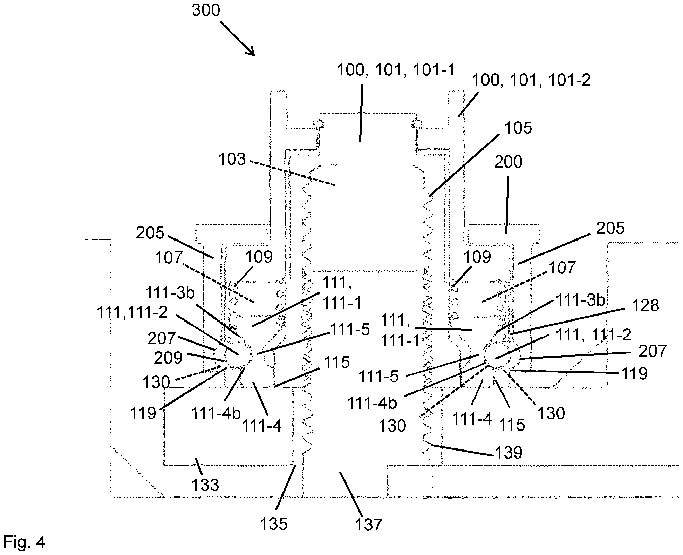

Die Figur 4 zeigt eine schematische Darstellung der in der Figur 3 dargestellten Sicherungsanordnung in dem verschraubten Zustand.

In dem in der Figur 4 dargestellten verschraubten Zustand der Sicherungsanordnung 300 ist nun erstmals das Bauelement 133 dargestellt, welches insbesondere einen Schiffslukendeckel, umfasst, wobei das Bauelement 133 eine Gewindeöffnung 135 aufweist, durch welche das gewindeführende Element 137, insbesondere Schraube, geführt ist.

Ein Außengewinde 139 des gewindeführenden Elements 137, insbesondere Schraube, ist hierbei in das in dem Gewindeaufnahmehohlraum 103 aufgenommene Innengewinde 105 des Mutterinnteils 101-1 des Mutterteils 101 der Sicherungsmutter 100 eingeschraubt, so dass hier der verschraubte Zustand der Sicherungsmutter 100 vorliegt.

Die im nicht verschraubten Zustand der Sicherungsmutter 100 durch die Kontaktöffnung 115 abschnittsweise verlagerte Arretierungsanordnung 111, bzw. Kontaktelement 111-1, bzw. Bauelementkontaktbereich 111-4 (siehe Figuren 1, 2 und 3), ist im vollständig verschraubten Zustand der Sicherungsmutter 100 durch das Anliegen an dem Bauelement 133 vollständig in den Arretierungshohlraum 107 verlagert und ist ausgebildet, das Federelement 109 zu komprimieren (siehe Figur 4).

Durch die entsprechende Verlagerung der Arretierungsanordnung 111, wird die im nicht verschraubten Zustand der Sicherungsmutter 100 durch die Arretierungsöffnung 119 abschnittsweise verlagerte Arretierungsanordnung 111, bzw. Arretierungselement 111-2 (siehe Figuren 1, 2, und 3) im vollständig verschraubten Zustand der Sicherungsmutter 100 vollständig in den Arretierungshohlraum 107 verlagert und ist ausgebildet, das Befestigungselement 205, insbesondere Befestigungsarm, des Sicherungswerkzeugs 200 freizugeben, um im vollständig verschraubten Zustand der Sicherungsmutter 100 das Sicherungswerkzeug 200 von der Sicherungsmutter 100 zu lösen (siehe Figur 4).

Während das Sicherungswerkzeug 200 somit in dem in den Figuren 1, 2 und 3 gezeigten, nicht verschraubten Zustand der Sicherungsmutter 100 nicht von der Sicherungsmutter 100 entfernt werden kann, kann in dem in der Figur 4 gezeigten, vollständig verschraubten Zustand der Sicherungsmutter 100 das Sicherungswerkzeug 200 von der Sicherungsmutter 100 entfernt werden.

In der in Figur 4 gezeigten ersten Ausführungsform weist das Arretierungselement 111-2 eine Kugelform auf, wodurch bei einer nach oben Verlagerung des Kontaktelements 111-1 das kugelförmige Arretierungselement 111-2 entlang der Verjüngungsseite 111-3b des Federkontaktbereichs 111-3 entlanggleiten kann. Dadurch liegt das kugelförmige Arretierungselement 111-2 in dem in Figur 4 gezeigten, vollständig verschraubten Zustand der Sicherungsmutter 100 sowohl an der Verjüngungsseite 111-3b des Federkontaktbereichs 111-3, an dem Verbindungsbereich 111-5 und an der weiteren Verjüngungsseite 111-4b des Bauelementkontaktbereichs 111-4 an.

Zwischen dem Verbindungsbereich 111-5 und einer den Arretierungshohlraum 107 begrenzenden Hohlraumwandung 128 des Mutterinnenteils 101-1 ist ein Arretierungselementaufnahmeraum 130 geformt, wobei in dem in Figur 4 gezeigten vollständig verschraubten Zustand der Sicherungsmutter 100 der Arretierungselementaufnahmeraum 130 fluchtend zu der Arretierungsöffnung 119 angeordnet ist, um eine vollständige Verlagerung des Arretierungselements 111-2 in den Arretierungselementaufnahmeraum 130 zu erreichen.

Somit greift die Gegenbefestigungskontur 209 des kugelförmigen Arretierungselements 111-2 nicht mehr in die Befestigungskontur 207 des Befestigungselements 205, insbesondere Befestigungsarm, des Sicherungswerkzeugs 200 ein, und das Sicherungswerkzeug 200 kann von der Sicherungsmutter 100 entfernt werden.

Die Figur 5 zeigt eine schematische Darstellung der in der Figur 4 dargestellten Sicherungsanordnung in dem verschraubten Zustand in einer unterschiedlichen Orientierung.

Im Gegensatz zur Orientierung der in der Figur 4 gezeigten Sicherungsanordnung 300 mit einer Schnittebene durch die Befestigungselemente 205, insbesondere Befestigungsarme, des Sicherungswerkzeugs 200 ist die in der Figur 5 gezeigte Sicherungsanordnung 300 so orientiert, dass die Schnittebene durch die entsprechenden Positionierungsarme 211 des Sicherungswerkzeugs 200 verläuft.

Somit weist das Sicherungswerkzeug 200 zumindest einen Positionierungsarm 211, insbesondere zwei gegenüberliegende Positionierungsarme 211 auf, welches ausgebildet ist, bzw. welche ausgebildet sind, in eine in dem Mutteraußenteil 101-2 geformte Außenpositionierungsöffnung 125-1 und in eine in dem Mutterinnenteil 101-1 geformte Innenpositionierungsöffnung 125 einzugreifen, bzw. gegenüberliegenden Außenpositionierungsöffnungen 125-1 und Innenpositionierungsöffnungen 125 einzugreifen, um das Sicherungswerkzeug 200 formschlüssig mit der Sicherungsmutter 100 zu verbinden, so dass eine positionelle Festlegung des Sicherungswerkzeugs 200 gegenüber der Sicherungsmutter 100 erreicht wird.

Gemäß der in der Figur 5 dargestellten Ausführungsform weist das Sicherungswerkzeug 200 insbesondere zwei gegenüberliegende Positionierungsarme 211 auf, welche an einer der Sicherungsmutter 100 zugewandten Unterseite 217 des Sicherungswerkzeugs 200, insbesondere der Sicherungsfläche 201, angeordnet sind, und welche ausgebildet sind, in eine Mehrzahl von in dem Mutterteil 101 geformten Außenpositionierungsöffnungen 125-1 und Innenpositionierungsöffnungen 125 einzugreifen, um das Sicherungswerkzeug 200 formschlüssig mit der Sicherungsmutter 100 zu verbinden.

Die Außenpositionierungsöffnungen 125-1 und die Innenpositionierungsöffnungen 125 erstrecken sich jeweils von dem Vorsprung 126 des Mutteraußenteils 101-2 durch das Mutteraußenteil 101-2 und durch das Mutterinnenteil 101-1 zu einer Unterseite 113 des Mutterteils 101.

Das Sicherungswerkzeug 200 bewirkt somit eine verdrehsichere Positionierung des Mutteraußenteils 101-2 an dem Mutterinnenteil 101-1 der Sicherungsmutter 100.

Somit kann die Funktionsweise der Sicherungsanordnung 300 der ersten Ausführungsform nun abschließend unter Bezugnahme auf alle Figuren 1, 2, 3, 4 und 5 erläutert werden.

Ohne den Eingriff der Positionierungsarme 211 des Sicherungswerkzeugs 200 in die Außenpositionierungsöffnungen 125-1 und in die Innenpositionierungsöffnungen 125 der Sicherungsmutter 100 ist keine Verdrehsicherung sichergestellt, so dass das Mutteraußenteil 101-2 in diesem in der Figur 5 nicht dargestellten Fall gegenüber dem Mutterinnenteil 101-1 der Sicherungsmutter 100 verdrehbar gelagert ist.

Dies bedeutet, dass im verschraubten Zustand der Sicherungsmutter 100 die Sicherungsmutter 100 ohne das Sicherungswerkzeug 200 nicht von dem gewindeführenden Element 137 abgeschraubt werden kann, da das Mutteraußenteil 101-2 keine formschlüssige Verbindung zum Mutterinnenteil 101-1 mit dem Innengewinde 105 aufweist, und somit kein Drehmoment für den Lösevorgang übertragen werden kann.

Dies ist erst durch das Aufsetzen des Sicherungswerkzeugs 200 möglich. Hierbei geht aus der Figur 4 hervor, dass im vollständig verschraubten Zustand der Sicherungsmutter 100 das Bauelement 133, insbesondere der Lukendeckel, gegen den Befestigungskontaktbereich 111-4 des Kontaktelements 111-1 der Arretierungsanordnung 111 drückt und das Kontaktelement 111-1 gegen die durch das Federelement 109 aufgebrachte Federkraft in den Arretierungshohlraum 107 verlagert.

Wie aus der Figur 4 ferner hervorgeht, sind hierdurch in dem vollständig verschraubten Zustand der Sicherungsmutter 100 die kugelförmigen Arretierungselemente 111-2 vollständig in den Arretierungshohlraum 107 verlagert, so dass hier die kugelförmigen Arretierungselemente 111-2 gerade nicht mehr durch die Arretierungsöffnung 119 nach außen verlagert sind.

Dies ermöglicht das Aufstecken des Sicherungswerkzeugs 200 auf die Sicherungsmutter 100, da die Befestigungselemente 205, insbesondere Befestigungsarme, des Sicherungswerkzeugs 200 somit über die Arretierungsöffnung 119 des Mutterteils 101 geschoben werden können, und die Befestigungskonturen 207 der Befestigungselemente 205 werden, wie in der Figur 4 gezeigt ist, vor den Arretierungsöffnungen 119 positioniert.

Wie in Bezug auf die Figur 5 erläutert wurde, erfolgt durch die formschlüssige Arretierung des Sicherungswerkzeugs 200 an der Sicherungsmutter 100 durch das Eingreifen der Positionierungsarme 211 des Sicherungswerkzeugs 200 in die Öffnungen 125, 125-1 der Sicherungsmutter 100 eine Verdrehsicherung dahingehend, dass das Mutteraußenteil 101-2 eine formschlüssige Verbindung zu dem Mutterinnenteil 101-1 aufweist.

Somit kann in diesem Fall ein auf das Mutteraußenteil 101-2, insbesondere Befestigungsschaft 121, beispielsweise durch einen Sechskantschlüssel übertragenes Drehmoment auf das Mutterinnenteil 101-1 übertragen werden, und die Sicherungsmutter 100 kann von dem gewindeführenden Element 137 abgeschraubt werden.

Wenn man nun den Blick von der Figur 4 auf die Figur 3 richtet, ist klar, dass bei dem entsprechenden Lösevorgang der Sicherungsmutter 100 das Bauelement 133 nicht mehr gegen den Befestigungskontaktbereich 111-4 des Kontaktelements 111-1 der Arretierungsanordnung 111 drückt, so dass die in dem Federelement 109 gespeicherte Federkraft das Kontaktelement 111-1 beaufschlagt und dieses aus dem Arretierungshohlraum 107 dahingehend verlagert, dass der Befestigungskontaktbereich 111-4 abschnittsweise durch die Kontaktöffnung 115 des Mutterteils 101 wieder nach unten verlagert wird.

Die in der Figur 3 dargestellte konische Form des Kontaktelements 111-1 wiederum bewirkt eine abschnittsweise Verlagerung des kugelförmigen Arretierungselements 111-2 durch die Arretierungsöffnung 119 dahingehend, dass die Gegenbefestigungskontur 209 des kugelförmigen Arretierungselements 111-2 mit der Befestigungskontur 207 des Befestigungselements 205 des Sicherungswerkzeugs 200 wechselwirkt, so dass das Sicherungswerkzeug 200 im nicht verschraubten Zustand der Sicherungsanordnung 300 nicht von der Sicherungsmutter 100 gelöst werden kann.

Zusammenfassend ermöglicht die Sicherungsanordnung 300 gemäß der vorliegenden Erfindung die folgenden Vorteile.

Erstens können durch die Sicherungsmutter 100 sicherheitskritische Bereiche, wie beispielsweise Lukendeckel auf einem Schiff, ohne das entsprechende Sicherungswerkzeug 200 nicht gelöst werden, was ein unbefugtes Lösen nicht erlaubt.

Wird das Bauelement 133, insbesondere der Lukendeckel, beispielsweise durch mehrere gewindeführende Elemente 137 gesichert, ist es nicht zwangsläufig notwendig, alle entsprechenden Muttern als Sicherungsmuttern 100 auszugestalten, da bereits die Verwendung von einer oder zwei Sicherungsmuttern 100 ausreichend ist, um zu verhindern, dass die Fixierung des Bauelements 133, insbesondere des Lukendeckels, gelöst werden kann.

Zweitens kann das Sicherungswerkzeug 200 von einer verantwortungsvollen Sicherheitsperson, beispielsweise einem Offizier des Schiffs, verwahrt werden und somit nur kontrolliert an entsprechende Personen zum Lösen der Fixierung des Bauelements 133, insbesondere Lukendeckels, herausgegeben werden, so dass ein Kontrollmechanismus gewährleistet wird, da genau dokumentiert werden kann, welche Sicherungswerkzeuge 200 herausgegeben werden.

Hierbei besteht beispielsweise eine Möglichkeit einer Kodierung der Sicherungswerkzeuge 200 hinsichtlich unterschiedlicher Sicherungsmuttern 100 dahingehend, dass die Form, Anzahl und Positionierung der Eingreifelemente 211 unterschiedlicher Sicherungswerkzeuge 200 und entsprechend komplementärer Öffnungen 125, 125-1 der zugehörigen Sicherungsmuttern 100 unterschiedlich gewählt wird, so dass eine Zuordnung unterschiedlicher Sicherungswerkzeuge 200 zu unterschiedlichen Sicherungsmuttern 100 möglich ist.

Drittens wird bei der Verwendung des Sicherungswerkzeugs 200 sichergestellt, dass sich bei einer von dem gewindeführenden Element 137 gelösten Sicherungsmutter 100 das Sicherungswerkzeug 200 nicht von der gelösten Sicherungsmutter 100 entfernen lässt, so dass nach der Beendigung von entsprechenden Arbeiten ein Fehlen des Sicherungswerkzeugs 200 den Rückschluss zulässt, dass die entsprechende Sicherungsmutter 100 gerade nicht wieder auf das entsprechende gewindeführende Element 137 geschraubt wurde, was ein Alarmsignal für die die verantwortungsvolle Sicherheitsperson, beispielsweise den Offizier des Schiffs sein kann, dass die Fixierung an dem Bauelement 133 gerade nicht wieder hergestellt worden ist, und so beispielsweise ein noch offener Lukendeckel vorliegt.

Hierbei können unterschiedliche Sicherungswerkzeuge 200 beispielsweise an einer speziellen Aufhängung aufbewahrt werden, und das Vorhandensein, bzw. Fehlen von Sicherungswerkzeugen 200 kann durch eine LED-Leuchte oder eine optische Anzeige sichtbar gemacht werden.

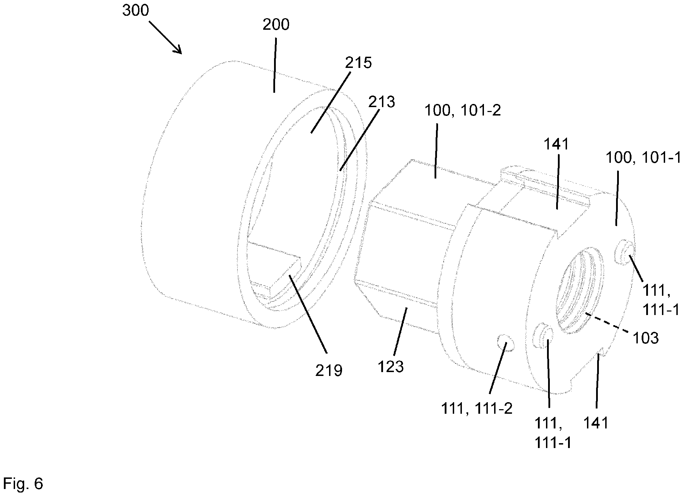

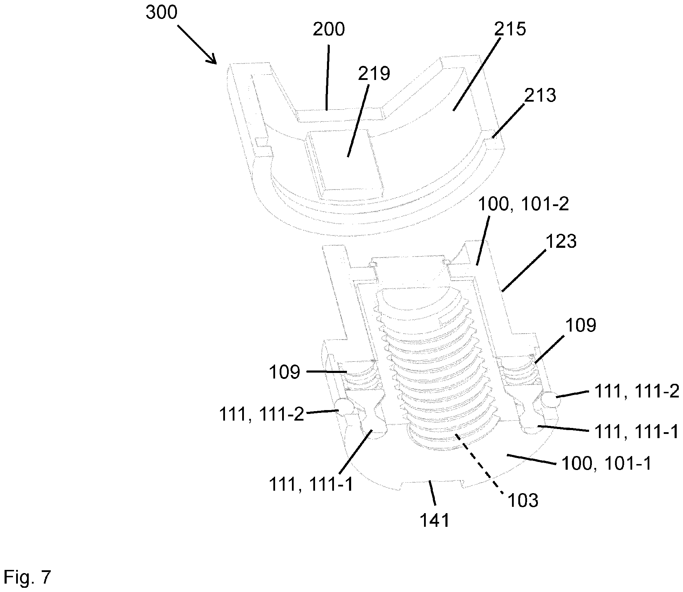

Die Figuren 6 und 7 zeigen schematische Darstellungen einer Sicherungsanordnung, umfassend ein Sicherungswerkzeug und eine Sicherungsmutter gemäß einer zweiten Ausführungsform in einem nicht verschraubten Zustand.

Die Sicherungsanordnung 300 der Figuren 6 und 7 ist ohne ein eingeführtes gewindeführendes Element 137 gezeigt, und liegt somit im nicht verschraubten Zustand vor.

In der Figur 6 ist eine Explosionsdarstellung in einer seitlichen Ansicht gezeigt und in der Figur 7 ist eine Explosionsdarstellung in Schnittansicht gezeigt, wobei in beiden Fällen das Sicherungswerkzeug 200 noch nicht auf die Sicherungsmutter 100 aufgeschoben ist.

Die Sicherungsmutter 100 gemäß der in Figur 6 und 7 dargestellten zweiten Ausführungsform ist im Wesentlichen identisch zu der in der Figur 1, 2, 3, 4 und 5 dargestellten ersten Ausführungsform, bis darauf, dass in der zweiten Ausführungsform die Armaufnahme 131 an der Außenseite des Mutterteils 101 nicht mehr vorhanden ist, da auch das Sicherungswerkzeug 200 keine Befestigungselemente 205, insbesondere keine Befestigungsarme, mehr aufweist.

Stattdessen weist das Sicherungswerkzeug 200 zumindest ein Eingreifelement 219, insbesondere zwei gegenüberliegende Eingreifelemente 219 auf, welches ausgebildet ist, bzw. welche ausgebildet sind, in eine an der Seite des Mutteraußenteils 101-2 angeordnete Aufnahme 141, bzw. gegenüberliegenden Aufnahmen 141 einzugreifen, um das Sicherungswerkzeug 200 formschlüssig mit der Sicherungsmutter 100 zu verbinden, so dass eine positionelle Festlegung des Sicherungswerkzeugs 200 gegenüber der Sicherungsmutter 100 erreicht wird.

Anstelle der Befestigungselemente 105 weist das Sicherungswerkzeug 200 eine Befestigungsöffnung 213, insbesondere eine Nut, auf, in welche die abschnittsweise durch die Arretierungsöffnung 119 verlagerte Arretierungsanordnung 111, insbesondere Arretierungselement 111-2 einführbar ist, um im nicht verschraubten Zustand der Sicherungsmutter 100 das Sicherungswerkzeug 200 unlösbar mit der Sicherungsmutter 100 zu verbinden.

Hier ist die Befestigungsöffnung 213, insbesondere die Nut, insbesondere die umlaufende Nut, des Sicherungswerkzeugs 200 insbesondere an der Innenseite 215 des Sicherungswerkzeugs 200 angeordnet.

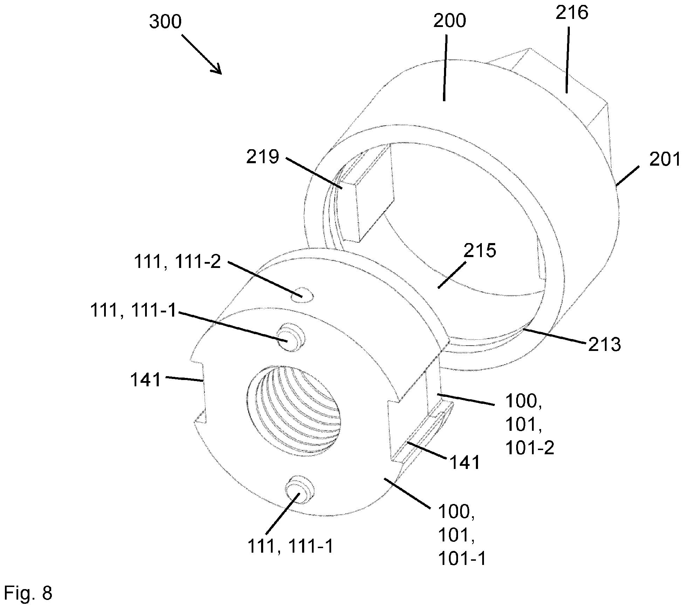

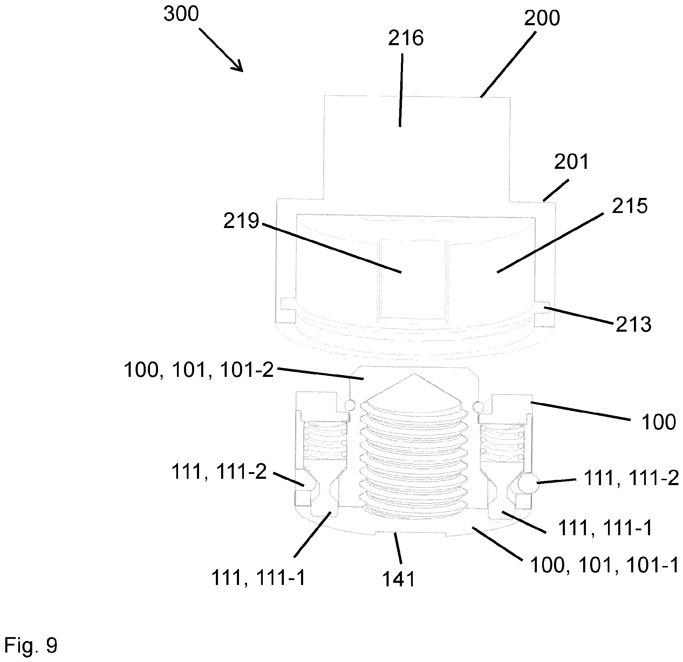

Die Figuren 8 und 9 zeigen schematische Darstellungen einer Sicherungsanordnung, umfassend ein Sicherungswerkzeug und eine Sicherungsmutter gemäß einer dritten Ausführungsform in einem nicht verschraubten Zustand.

Der in der Sicherungsanordnung 300 der dritten Ausführungsform der Figur 8 und 9 gezeigte Arretierungsmechanismus mit der Befestigungsöffnung 213 an der Innenseite 215 des Sicherungswerkzeugs 200 ist im Wesentlichen identisch zum Arretierungsmechanismus der Sicherungsanordnung 300 der zweiten Ausführungsform der Figur 6 und 7.

In der in den Figuren 8 und 9 gezeigten Ausführungsform ist jedoch unterschiedlich, dass das Mutterteil 101 der Sicherungsmutter 100, insbesondere das Mutterinnenteil 101-1 und das Mutteraußenteil 101-2 keinen Befestigungsschaft, insbesondere keinen weiteren Befestigungsschaft 123 und keinen Befestigungsschaft 121, aufweisen, so dass die Oberseite der Sicherungsmutter 100 im Wesentlichen keine Erhöhung aufweist.

Stattdessen weist das Sicherungswerkzeug 200 einen sich von der Sicherungsfläche 201 erstreckenden Befestigungsschaft 216 mit einer Außenkontur, insbesondere einer 6-Kant-Außenkontur, auf, welche durch ein Befestigungswerkzeug, insbesondere durch ein 6-Kant-Befestigungswerkzeug, hintergreifbar ist, um ein Aufschrauben der Sicherungsanordnung 300 auf das gewindeführende Element 137 zu ermöglichen.

### Bezugszeichenliste

- 100: Sicherungsmutter
- 101: Mutterteil
- 101-1: Mutterinnenteil
- 101-2: Mutteraußenteil
- 101-3: Oberseite des Mutterteils
- 101-4: Umlaufende Öffnung
- 103: Gewindeaufnahmehohlraum
- 105: Innengewinde
- 107: Arretierungshohlraum
- 109: Federelement
- 110: Verbindungselement
- 111: Arretierungsanordnung
- 111-1: Kontaktelement
- 111-2: Arretierungselement
- 111-2a: Kontaktelementseite des Arretierungselements
- 111-2b: Sicherungswerkzeugseite des Arretierungselements
- 111-3: Federkontaktbereich
- 111-3a: Federkontaktseite
- 111-3b: Verjüngungsseite
- 111-4: Bauelementkontaktbereich
- 111-4a: Bauelementkontaktseite
- 111-4b: Weitere Verjüngungsseite
- 111-5: Verbindungsbereich
- 113: Unterseite des Mutterteils
- 115: Kontaktöffnung
- 117: Außenseite des Mutterteils
- 119: Arretierungsöffnung
- 121: Befestigungsschaft
- 123: Weiterer Befestigungsschaft
- 125: Innenpositionierungsöffnung
- 125-1: Außenpositionierungsöffnung
- 126: Vorsprung des Mutteraußenteils
- 127: Wandungsaußenseite des Mutteraußenteils
- 128: Hohlraumwandung
- 129: Weitere Wandungsaußenseite des Mutterinnenteils
- 130: Arretierungselementaufnahmeraum
- 131: Armaufnahmeöffnung
- 133: Bauelement
- 135: Gewindeöffnung
- 137: Gewindeführendes Element
- 139: Außengewinde des gewindeführenden Elements
- 141: Aufnahme an der Außenseite des Mutteraußenteils
- 200: Sicherungswerkzeug
- 201: Sicherungsfläche
- 203: Sicherungsflächenausnehmung
- 205: Befestigungselement
- 207: Befestigungskontur
- 209: Gegenbefestigungskontur
- 211: Positionierungsarm
- 213: Befestigungsöffnung
- 215: Innenseite des Sicherungswerkzeugs
- 216: Befestigungsschaft des Sicherungswerkzeugs
- 217: Unterseite des Sicherungswerkzeugs
- 219: Eingreifelement
- 300: Sicherungsanordnung

## Patentansprüche

1. Sicherungsmutter (100) zur Sicherung eines durch eine Gewindeöffnung (135) eines Bauelements (133) geführten gewindeführenden Elements (137) an dem Bauelement (133),
wobei die Sicherungsmutter (100) ein Mutterteil (101, 101-1, 101-2) mit einem Gewindeaufnahmehohlraum (103) aufweist, in welchem ein Innengewinde (105) geformt ist, welches auf ein Außengewinde (139) des gewindeführenden Elements (137) aufschraubbar ist,
wobei das Mutterteil (101, 101-1, 101-2) einen Arretierungshohlraum (107) aufweist, in welchem zumindest ein Federelement (109) und zumindest eine durch das Federelement (109) beaufschlagte Arretierungsanordnung (111, 111-1, 111-2) angeordnet sind, wobei der Arretierungshohlraum (107) an einer dem Bauelement (133) zugewandten Seite zumindest eine Kontaktöffnung (115) und an einer dem Gewindeaufnahmehohlraum (103) abgewandten Seite zumindest eine Arretierungsöffnung (119) aufweist,
wobei das Mutterteil (101, 101-1, 101-2) im nicht verschraubten Zustand der Sicherungsmutter (100) ausgebildet ist, das Federelement (109) mit einer Kraft zu beaufschlagen und die Arretierungsanordnung (111, 111-1, 111-2) abschnittsweise durch die Arretierungsöffnung (119) und abschnittsweise durch die Kontaktöffnung (115) zu verlagern,
wobei die abschnittsweise durch die Arretierungsöffnung (119) verlagerte Arretierungsanordnung (111, 111-1, 111-2) mit einem Befestigungselement (205) eines Sicherungswerkzeugs (200) verbindbar ist, um im nicht verschraubten Zustand der Sicherungsmutter (100) das Sicherungswerkzeug (200) unlösbar mit der Sicherungsmutter (100) zu verbinden,
wobei die im nicht verschraubten Zustand der Sicherungsmutter (100) durch die Kontaktöffnung (115) abschnittsweise verlagerte Arretierungsanordnung (111, 111-1, 111-2) im vollständig verschraubten Zustand der Sicherungsmutter (100) durch das Anliegen an dem Bauelement (133) vollständig in den Arretierungshohlraum (107) verlagert ist und ausgebildet ist, das Federelement (109) zu komprimieren,
wobei die im nicht verschraubten Zustand der Sicherungsmutter (100) durch die Arretierungsöffnung (119) abschnittsweise verlagerte Arretierungsanordnung (111, 111-1, 111-2) im vollständig verschraubten Zustand der Sicherungsmutter (100) vollständig in den Arretierungsbereich verlagert ist, und ausgebildet ist, das Befestigungselement (205) des Sicherungswerkzeugs (200) freizugeben, um im vollständig verschraubten Zustand der Sicherungsmutter (100) das Sicherungswerkzeug (200) von der Sicherungsmutter (100) zu lösen.

2. Sicherungsmutter (100) nach Anspruch 1, wobei das Mutterteil (101, 101-1, 101-2) ein Mutterinnenteil (101-1) mit dem Gewindeaufnahmehohlraum (103) aufweist, in welchem das Innengewinde (105) geformt ist, welches auf das Außengewinde (139) des gewindeführenden Elements (137) aufschraubbar ist, wobei das Mutterteil (101, 101-1, 101-2) ein Mutteraußenteil (101-2) aufweist, welches auf das Mutterinnenteil (101-1) aufgesetzt ist,
wobei das auf das Mutterinnenteil (101-1) aufgesetzte Mutteraußenteil (101-2) im nicht verschraubten Zustand der Sicherungsmutter (100) ausgebildet ist, das Federelement (109) mit einer Kraft zu beaufschlagen und die Arretierungsanordnung (111, 111-1, 111-2) abschnittsweise durch die Arretierungsöffnung (119) und abschnittsweise durch die Kontaktöffnung (115) zu verlagern.

3. Sicherungsmutter (100) nach Anspruch 1 oder 2, **dadurch gekennzeichnet, dass** das Mutterteil (101, 101-1, 101-2), insbesondere das Mutteraußenteil (101-2), einen sich insbesondere von dem Mutterinnenteil (101-1) erstreckenden Befestigungsschaft (121) mit einer Außenkontur, insbesondere einer 6-Kant-Außenkontur, aufweist, welche durch ein Befestigungswerkzeug, insbesondere durch ein 6-Kant-Befestigungswerkzeug, hintergreifbar ist.

4. Sicherungsmutter (100) nach Anspruch 2 oder 3, **dadurch gekennzeichnet, dass** in dem Mutteraußenteil (101-2) zumindest eine Außenpositionierungsöffnung (125-1) geformt ist, und dass in dem Mutterinnenteil (101-1) zumindest eine Innenpositionierungsöffnung (125) geformt ist, wobei zumindest ein Positionierungsarm (211) des Sicherungswerkzeugs (200) durch die fluchtend zueinander angeordnete zumindest eine Außenpositionierungsöffnung (125-1) und zumindest eine Innenpositionierungsöffnung (125) führbar ist, um das Sicherungswerkzeug (200) mit dem Mutteraußenteil (101-2) und mit dem Mutterinnenteil (101-1) formschlüssig zu verbinden.

5. Sicherungsmutter (100) nach einem der Ansprüche 2 bis 4, **dadurch gekennzeichnet, dass** das Mutterinnenteil (101-1) einen weiteren Befestigungsschaft (123) aufweist, welcher sich in das Mutteraußenteil (101-2), insbesondere in den Befestigungsschaft (121) des Mutteraußenteils (101-2), erstreckt und an dem Mutteraußenteil (101-2), insbesondere an dem Befestigungsschaft (121) des Mutteraußenteils (101-2), durch ein Sicherungselement verliersicher festgelegt ist.

6. Sicherungsmutter (100) nach einem der Ansprüche 2 bis 5, **dadurch gekennzeichnet, dass** das auf das Mutterinnenteil (101-1) aufgesetzte Mutteraußenteil (101-2) ohne die Verwendung des Sicherungswerkzeugs (200) gegenüber dem Mutterinnenteil (101-1) verdrehbar gelagert ist.

7. Sicherungsmutter (100) nach einem der vorangehenden Ansprüche, **dadurch gekennzeichnet, dass** der Arretierungshohlraum (107) als ein das Mutterteil (101, 101-1, 101-2), insbesondere das Mutterinnenteil (101-1) zumindest abschnittsweise umlaufender Arretierungshohlraum (107) ausgebildet ist,
wobei das zumindest eine Federelement (109) als eine zumindest abschnittsweise umlaufende Tellerfeder ausgebildet ist, welche in dem zumindest abschnittsweise umlaufenden Arretierungshohlraum (107) angeordnet ist, wobei die Tellerfeder in Wirkverbindung mit zumindest zwei Arretierungsanordnungen (111, 111-1, 111-2) steht, welche insbesondere auf einander gegenüberliegenden Seiten des Arretierungshohlraums (107) angeordnet sind, oder
wobei das zumindest eine Federelement (109) ein erstes Federelement (109) und ein zweites Federelement (109) umfasst, wobei die zumindest eine Arretierungsanordnung (111, 111-1, 111-2) eine erste und eine zweite Arretierungsanordnung (111, 111-1, 111-2) umfasst, wobei das erste Federelement (109) in Wirkverbindung mit der ersten Arretierungsanordnung (111, 111-1, 111-2) steht, wobei das zweite Federelement (109) in Wirkverbindung mit der zweiten Arretierungsanordnung (111, 111-1, 111-2) steht, und wobei insbesondere das erste und zweite Federelement (109), sowie die erste und zweite Arretierungsanordnung (111, 111-1, 111-2) jeweils auf einander gegenüberliegenden Seiten des Arretierungshohlraums (107) angeordnet sind.

8. Sicherungsmutter (100) nach einem der vorangehenden Ansprüche, **dadurch gekennzeichnet, dass** die Arretierungsanordnung (111, 111-1, 111-2) zumindest ein Kontaktelement (111-1) aufweist, welches einen dem Bauelement (133) abgewandten Federkontaktbereich (111-3) aufweist, welcher durch das zumindest eine Federelement (109) kontaktiert wird, und welches einen dem Bauelement (133) zugewandten Bauelementkontaktbereich (111-4) aufweist, welcher ausgebildet ist, im vollständig verschraubten Zustand der Sicherungsmutter (100) an dem Bauelement (133) anzuliegen,
wobei der Bauelementkontaktbereich (111-4) im vollständig verschraubten Zustand der Sicherungsmutter (100) durch das Anliegen des Bauelementkontaktbereichs (111-4) an dem Bauelement (133) vollständig in den Arretierungshohlraum (107) verlagert ist und ausgebildet ist, das Federelement (109) zu komprimieren, und
wobei der Bauelementkontaktbereich (111-4) im nicht verschraubten Zustand der Sicherungsmutter (100) durch das Federelement (109) mit einer Kraft beaufschlagt wird und abschnittsweise durch die Kontaktöffnung (115) verlagert wird.

9. Sicherungsmutter (100) nach Anspruch 8, **dadurch gekennzeichnet, dass** der Federkontaktbereich (111-3) mit dem Bauelementkontaktbereich (111-4) durch einen Verbindungsbereich (111-5) verbunden ist,
wobei der Federkontaktbereich (111-3) eine Federkontaktseite (111-3a) aufweist, an welcher das Federelement (109) aufliegt, wobei sich der Durchmesser des Federkontaktbereichs (111-3) von der Federkontaktseite (111-3a) in Richtung des Verbindungsbereichs (111-5) verringert, und/oder
wobei der Bauelementkontaktbereich (111-4) eine Bauelementkontaktseite (111-4a) aufweist, an welcher das Bauelement (133) anliegt, wobei sich der Durchmesser des Bauelementkontaktbereichs (111-4) von der Bauelementkontaktseite (111-4a) in Richtung des Verbindungsbereichs (111-5) verringert.

10. Sicherungsmutter (100) nach Anspruch 8 oder 9, **dadurch gekennzeichnet, dass** die Arretierungsanordnung (111, 111-1, 111-2) zumindest ein Arretierungselement (111-2) aufweist, welches an einer dem Sicherungswerkzeug (200) abgewandten Kontaktelementseite (111-2a) durch das zumindest eine Kontaktelement (111-1), insbesondere den Federkontaktbereich (111-3), kontaktiert wird, und welches eine dem Sicherungswerkzeug (200) zugewandte Sicherungswerkzeugseite aufweist, welche im nicht verschraubten Zustand der Sicherungsmutter (100) durch die Arretierungsöffnung (119) abschnittsweise verlagert ist, um durch das Sicherungswerkzeug (200) hintergriffen zu werden,
wobei das Arretierungselement (111-2) im vollständig verschraubten Zustand der Sicherungsmutter (100) vollständig in den Arretierungshohlraum (107) verlagert ist, um das Sicherungswerkzeug (200) freizugeben.

11. Sicherungswerkzeug (200) zur Sicherung einer Sicherungsmutter (100) an einem durch eine Gewindeöffnung (135) eines Bauelements (133) geführten gewindeführenden Element (137),
wobei das Sicherungswerkzeug (200) eine Sicherungsfläche (201) aufweist, welche ausgebildet ist, auf einer Seite eines Mutterteils (101, 101-1, 101-2) der Sicherungsmutter (100) anzuliegen,
wobei das Sicherungswerkzeug (200) zumindest ein Befestigungselement (205) aufweist, welches an der Sicherungsfläche (201) angeordnet und ausgebildet ist, sich entlang der Seite des Mutterteils (101, 101-1, 101-2) der Sicherungsmutter (100) zu erstrecken, wobei das zumindest eine Befestigungselement (205) ausgebildet ist, in einem nicht verschraubten Zustand der Sicherungsmutter (100) eine Verbindung mit einer Arretierungsanordnung (111, 111-1, 111-2) der Sicherungsmutter (100) bereitzustellen, um das Sicherungswerkzeug (200) verliersicher an der Sicherungsmutter (100) zu befestigen, und
wobei das Sicherungswerkzeug (200) zumindest ein Eingreifelement (219) aufweist, welches ausgebildet ist, in eine an der Seite des Mutteraußenteils (101-2) angeordnete Aufnahme (141) einzugreifen, um das Sicherungswerkzeug (200) formschlüssig mit der Sicherungsmutter (100) zu verbinden.

12. Sicherungswerkzeug (200) nach Anspruch 11, **dadurch gekennzeichnet, dass** das Sicherungswerkzeug (200) einen Befestigungsarm aufweist, welcher ausgebildet ist, die abschnittsweise durch die Arretierungsöffnung (119) verlagerte Arretierungsanordnung (111, 111-1, 111-2) zu hintergreifen, um im nicht verschraubten Zustand der Sicherungsmutter (100) das Sicherungswerkzeug (200) unlösbar mit der Sicherungsmutter (100) zu verbinden, oder dass das Sicherungswerkzeug (200) eine Befestigungsöffnung (213), insbesondere eine Nut, aufweist, in welche die abschnittsweise durch die Arretierungsöffnung (119) verlagerte Arretierungsanordnung (111, 111-1, 111-2) einführbar ist, um im nicht verschraubten Zustand der Sicherungsmutter (100) das Sicherungswerkzeug (200) unlösbar mit der Sicherungsmutter (100) zu verbinden.

13. Sicherungswerkzeug (200) nach Anspruch 11 oder 12, **dadurch gekennzeichnet, dass** das Sicherungswerkzeug (200) zumindest zwei Befestigungsarme aufweist, welche an einander gegenüberliegenden Seiten der Sicherungsfläche (201) angeordnet und ausgebildet sind, sich entlang der Wandungsaußenseite (127) des Mutteraußenteils (101-2) der Sicherungsmutter (100) und entlang der weiteren Wandungsaußenseite (127) des Mutterinnenteils (101-1) der Sicherungsmutter (100) zu erstrecken, wobei die zumindest zwei Befestigungsarme ausgebildet sind, in einem nicht verschraubten Zustand der Sicherungsmutter (100) jeweils eine Arretierungsanordnung (111, 111-1, 111-2) von zumindest zwei an gegenüberliegenden Seiten der Sicherungsmutter (100) angeordneten Arretierungsanordnungen (111, 111-1, 111-2) zu hintergreifen.

14. Sicherungswerkzeug (200) nach einem der Ansprüche 11, 12 oder 13, **dadurch gekennzeichnet, dass** die Sicherungsfläche (201) eine Sicherungsflächenausnehmung (203) aufweist, durch welche ein Befestigungsschaft (121) eines Mutteraußenteils (101-2) der Sicherungsmutter (100) führbar ist, oder
dass das Sicherungswerkzeug (200) einen sich von der Sicherungsfläche (201) erstreckenden Befestigungsschaft (216) mit einer Außenkontur, insbesondere einer 6-Kant-Außenkontur, aufweist, welche durch ein Befestigungswerkzeug, insbesondere durch ein 6-Kant-Befestigungswerkzeug, hintergreifbar ist.

15. Sicherungsanordnung (300) umfassend eine Sicherungsmutter (100) nach einem der Ansprüche 1 bis 10 und ein Sicherungswerkzeug (200) nach einem der Ansprüche 11 bis 15.
